# EUROPÄISCHE PATENTSCHRIFT

(11) **EP 0 281 983 B1**
(45) Veröffentlichungstag und Bekanntmachung des Hinweises auf die Patenterteilung: **28.07.1993**
(21) Anmeldenummer: 88103469.8
(22) Anmeldetag: 05.03.1988
(51) Int. Cl.: A47B 47/03, H05K 7/18, E04B 1/348, F25D 23/06, E06B 3/26

(54) **Stecksystem zum Aufbau eines Gehäuserahmens**
Assembling system for a housing frame
Système d'assemblage pour un bâti d'enceinte

(30) Priorität: 12.03.1987 DE 8703695 U
(43) Veröffentlichungstag der Anmeldung: 14.09.1988
(73) Patentinhaber: Fischbach GmbH & Co.KG, D-57290 Neunkirchen (DE)
(72) Erfinder: Bürger, Willy, Dipl Ing., D5521 Friesenhagen (DE); Berscheid, Alfred, D-5561 Niederkeil (DE); Gies ,Robert, D- 5500 Trier (DE)
(74) Vertreter: Boecker, Joachim, Dr.-Ing.

(56) Entgegenhaltungen:
- CH-A- 662 166
- DE-A- 2 731 328
- DE-A- 3 120 076
- GB-A- 2 083 116

## Beschreibung

Die Erfindung betrifft ein Stecksystem zum Aufbau eines Gehäuserahmens gemäß dem Oberbegriff des Anspruches 1. Ein solches Stecksystem ist im wesentlichen bekannt aus der DE-A-2511584.

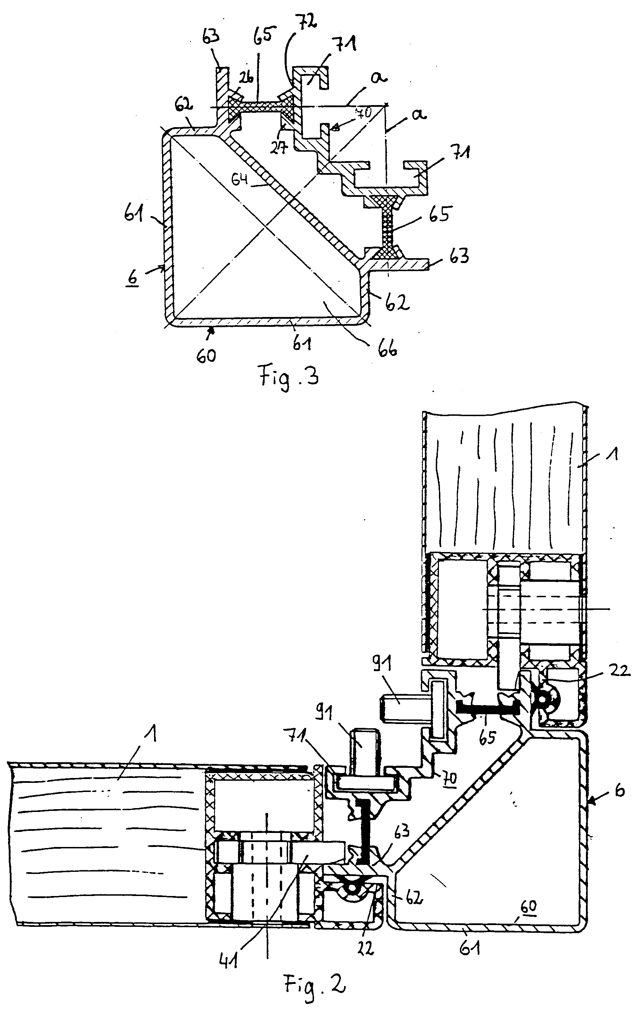

Bei dem bekannten Stecksystem sind die Profilstangen als einteilige metallische Strangpreßprofile ausgebildet, wobei die im Profilstangenquerschnitt liegenden Mittellinie a (Figur 3) der Verschiebenuten etwa unter 45 Grad zu den langen Seitewänden der Profilstange verläuft.

Ein Nachteil des bekannten Stecksystems besteht darin, daß die Profilstangen bei Verwendung wärmeisolierender Wandelemente unerwünschte Wärmebrücken zwischen dem Innenraum des Gehäuses und der Umgebung bilden. Ein weiterer Nachteil ist die genannte, zu den Seitewänden der Profilstange schräg verlaufende Anordnung der Verschiebenut, die eine Befestigung von Einbauten häufig erschwert.

Aus der DE-A-2 731 328 ist ein Stecksystem bekannt, das pro Profilstange mit zwei Verschiebenuten ausgerüstet ist, die derart zueinander angeordnet sind, daß ihre im Querschnitt der Profilstange liegenden Mittelachsen senkrecht zueinander und senkrecht zu je einer der Seitenwände des Gehäuserahmens verlaufen. Bei diesem Stecksystem haben die Profilstangen einen rechteckförmigen Querschnitt, und die beiden Verschiebenuten sind an je eine der inneren Seiten dieser Profilstangen unmittelbar angebracht. Der Nachteil dieses Stecksystem besteht darin, daß der Innenraum des gebildeten Gehäuses nicht voll augenutzt werden kann und daß die aus Metall bestehenden Profilstangen Wärmebrücken zwischen dem Innenraum und dem das Gehäuse umgebenden Raum bilden.

Der Erfindung liegt die Aufgabe zugrunde ein Stecksystem der eingangs genannten Art zu entwickeln, bei welchem ein Wärmedurchtritt durch die Profilstangen wesentlich erschwert ist und gleichzeitig der Innenraum des aus dem Stecksystem aufgebauten Gehäuses maximal ausnutzbar ist.

Zur Lösung dieser Aufgabe wird ein Stecksystem gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der in den Figuren gezeigten Ausführungsbeispiele soll die Erfindung näher erläutert werden. Es zeigen
- Figur 1: die Ecke eines Gehäuses, deren Rahmen aus einem Stecksystem gemäß der Erfindung aufgebaut ist und in welchen Wandelemente eingesetzt sind,
- Figur 2: eine Ansicht von oben auf den in Figur 1 gezeigten Gehäuseausschnitt,
- Figur 3: ein Ausführungsbeispiel einer bei dem Stecksystem nach der Erfindung verwendbaren Profilstange im Querschnitt,
- Figur 4: ein Ausführungsbeispiel einer an eine Außenprofilstange angeschlossenen Zwischenprofilstange,
- Figur 5: die Zwischenprofilstange gemäß Figur 4 im Querschnitt mit daran anschließbaren Wandelementen.

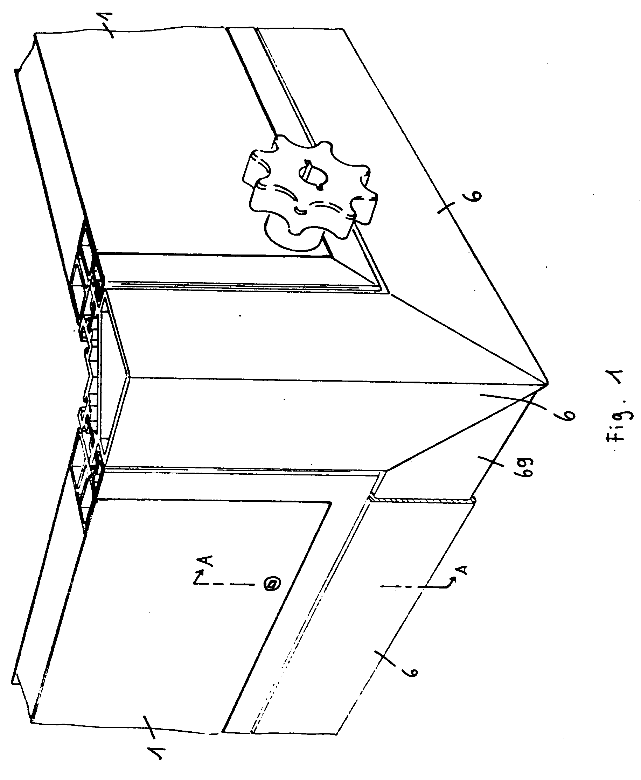

Figur 1 zeigt eine Ecke eines würfel- oder quaderförmigen Gehäuses, welches mit Hilfe eines Stecksystems gemäß der Erfindung aufgebaut ist. Der Gehäuserahmen besteht aus Profilstangen 6, von denen in jeder Ecke drei auf Gährung abgeschnittene Profilstangen zusammenlaufen. Diese werden zusammengehalten durch ein Eckstück 69, das aus einem zentralen würfelförmigen Teil besteht, von dem drei rechtwinklig zueinander angeordnete Stutzen ausgehen, auf welche die Profilstangen 6 aufgeschoben sind. In Figur 1 ist das Eckstück 69 durch Wegbrechen des Endes einer Profilstange sichtbar gemacht. Die Verbindung zwischen den Profilstangen und den Eckstücken kann beispielsweise durch Kleben, Schrauben oder Nieten erfolgen. Die Profilstangen sind soweit über das Eckstück 69 geschoben, daß dieses vollständig in den Profilstangen verschwindet. In die von den Profilstangen 6 gebildeten Seitenöffnungen sind Wandelemente 1 eingesetzt, die mit einem Anlageflansch 22 gegen einen Anlageflansch 63 der Profilstangen 6 anliegen und mittels eines am Wandelement vorhandenen Verschlußriegel 41, der hinter den Anlageflansch 63 greift, verriegelbar sind.

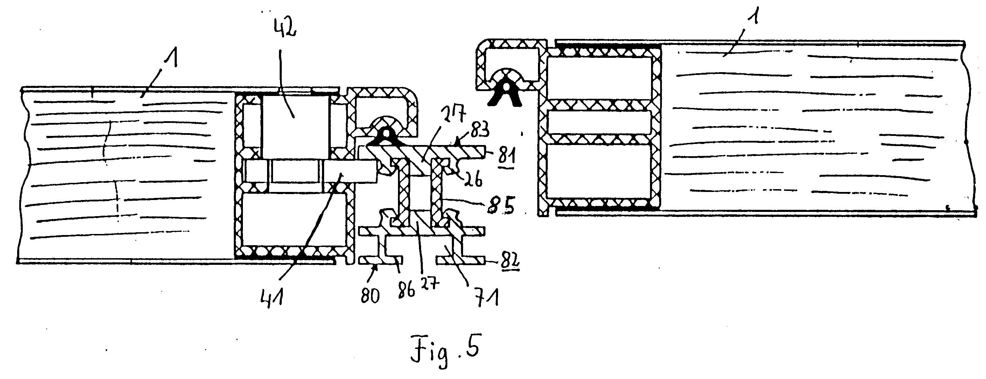

Die in Figur 3 im Querschnitt gezeigte Profilstange 6 besteht aus einem ersten metallischen Profilstangenteil 60 und einem zweiten metallischen Profilstangenteil 70. Das erste Profilstangenteil 60 bildet im Querschnitt eine geschlossene Kammer 66, die begrenzt wird von zwei rechwinklig aneinander grenzenden langen Seitewänden 61, an deren anderen Enden sich je eine kurze Seitewand 62 rechtwinklig anschließt, deren Enden durch eine schräg zu den anderen Seitewänden 61,62 verlaufende Seitewand 64 miteinander verbunden sind. Auf die letztgenannte Seitewand 64 kann auch verzichtet werden. Von den Verbindungspunkten zwischen den Seitewänden 62 und 64 erstreckt sich je ein Anlageflansch 63 für die Anlage der Wandelemente parallel zu je einer langen Seitewand 61. Das zweite Profilstangenteil 70 besteht im wesentlichen aus zwei rechtwinklig zueinander und parallel zu je einer Gehäuseseitenwand angeordnete, an sich bekannte Verschiebenuten 71 zur Aufnahme von Schrauben 91, mit deren Hilfe Geräte im Inneren des Gehäuses befestigt werden können. Die Schrauben sind vorzugsweise als Hammerkopfschrauben ausgebildet, die an jeder beliebigen Stelle durch Drehen in die Verschiebenut einsetzbar sind. Zur Verhinderung eines Wärmedurchtrittes durch die Profilstange vom Gehäuseinneren nach außen oder umgekehrt sind die beiden Profilstangenteile 60 und 70 über zwei Isolierstegwände 65 miteinander verbunden, die sich von der Rückseite der Anlageflansche 63 zur unteren Seite der Bodenwand 72 der Verschiebenuten erstrecken. Die Isolierstegwände sind an ihren Enden schwalbenschwanzförmig ausgebildet. Eine andere Möglichkeit ihrer Ausbildung besteht darin, sie an ihren Enden abzuwinkeln, wie dies bei den Isolierstegwänden 65 in Figur 5 der Fall ist. Der relativ schmale Vorsprung 26 ist bei den stranggepreßten Profilstangenteilen zunächst weniger stark abgewinkelt und wird nach dem Einsetzen der Isolierstegwände gegen die Isolierstegwände gedrückt, wodurch eine starre und feste Verbindung erreicht wird.

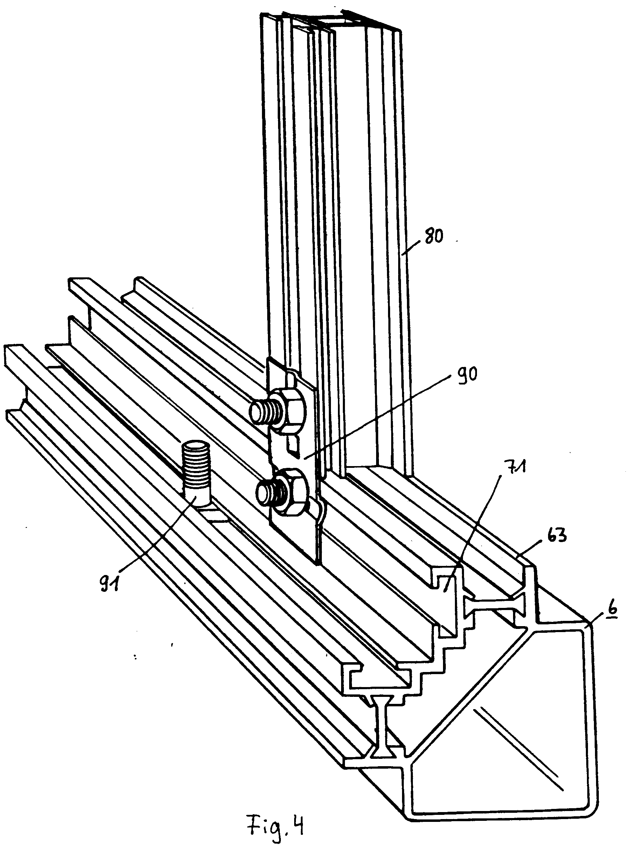

Zwischen den Außenprofilstange 6, die in derselben Seitenebene des Gehäuses liegen, können Zwischenprofilstangen 80 eingefügt werden (Figur 4 und 5), wodurch die Seitenöffnung des Gehäuserahmens in zwei oder mehrere Felder unterteilt werden kann. In jedes dieser Felder ist dann ein Wandelement einsetzbar. Figur 4 zeigt den Anschluß einer solchen Zwischenprofilstange 80 an eine Außenprofilstange 6. Das Querschnittsprofil dieser Zwischenprofilstange ist aus Figur 5 ersichtlich. Es besteht aus zwei metallischen Zwischenprofilen 81,82, die beide im wesentlichen plattenförmig ausgebildet sind und über zwei wärmeisolierende Isolierstegwände 65 miteinander verbunden sind. Das zur Außenseite des Gehäuses liegende erste Zwischenprofilstangenteil 81 bildet einen Doppelanlageflansch 83 für zwei benachbarte Wandelemente 1, von denen in Figur 5 das linke am Flansch anliegt und mit diesem über einen drehbaren Verschlußriegel 41 verriegelt ist, der über eine Antriebswelle 42, in die ein Vierkantschlüssel von außen einsteckbar ist, gedreht werden kann. Das zweite Zwischenprofilstangenteil 82 trägt auf seiner nach innen gerichteten Seite eine Verschiebenut 71. An den durch die Isolierstegwände verbundenen Seiten der beiden plattenförmigen Teile 81,82 sind wieder Vorsprünge 26,27 zur Aufnahme der entsprechend geformte Enden der Isolierstegwände vorhanden. Um auf der Innenseite des Gehäuses möglichst durchgehende glatte Flächen zu bekommen, sind die äußersten Flansche 86 der Verschiebenut 71 in Richtung zur Seite der Zwischenprofilstange soweit verlängert, daß sie an ein angeschlossenes Wandelement angrenzen.

Wie Figur 4 zeigt, wird die Zwischenprofilstange stumpf auf die hohen Kanten des Anlageflansches 63 und der Verschiebenut 71 aufgesetzt und mit einer Lasche 90 und zwei Schrauben über benachbarte Verschiebenuten von Zwischenprofilstange und Hauptprofilstange mit der letzteren verbunden.

## Patentansprüche

1. Stecksystem zum Aufbau eines Gehäuserahmens, in dessen Seitenöffnungen Wandelemente (1) einsetzbar sind, welches Stecksystem aus Eckstücken (69) und Profilstangen (6) besteht, wobei von jedem Eckstück drei zueinander rechtwinklig angeordnete Stutzen ausgehen, auf die die Profilstangen aufschiebbar sind, und wobei die Profilstangen ein erstes metallisches Profilstangenteil (60) aufweisen, welches im Querschnitt zwei rechtwinklig aneinandergrenzende lange Seitenwände (61) hat, an deren Enden sich je eine kurze rechtwinklig nach innen abgebogene Seitewand (62) anschließt, an deren freien Enden sich je eine rechtwinklig nach außen abgebogene Flanschwand (63) anschließt, und welche Profilstangen (6) mit mindestens einer an der Innenseite des Gehäuses liegenden metallischen Verschiebenut (71) versehen sind, **dadurch gekennzeichnet,** daß zwei Verschiebenuten (71) vorhanden sind, die derart zueinander angeordnet sind, daß ihre im Querschnitt der Profilstange (6) liegenden Mittelachsen (a) senkrecht zueinander und senrecht zu je einer der langen Seitenwände (61) verlaufen, und daß die beiden Verschiebenuten (65) von einem zweiten metallisches Profilstangenteil (70) gebildet werden, welches über aus wärmeisolierendem Material bestehenden Isolierstegwände (65) mit dem erstes metallisches Profilstangenteil (60) verbunden sind.

2. Stecksystem nach Anspruch 1, **dadurch gekennzeichnet,** daß die Verbindung zwischen den beiden Profilstangenteilen (60,70) über zwei Isolierstegwände (65) erfolgt, die sich jeweils zwischen einer Flanschwand (63) und der Bodenwand (72) einer Verschiebenut (71) erstrecken.

3. Stecksystem nach einem der vorhergehenden Ansprüche, **dadurch gekennzeichnet,** daß die Isolierstegwände (65) an ihren Enden schwalbenschwanzförmig oder winkelförmig ausgebildet sind und daß die einander gegenüberliegenden Seiten der Flanschwand (63) und der Bodenwand (72) der Verschiebenut (71) mit entsprechend geformten Vorsprüngen (26,27) versehen sind.

4. Stecksystem nach einem der vorhergehenden Ansprüche, **dadurch gekennzeichnet,** daß die Isolierstegwände (65) aus glassfaserverstärktem Kunststoff bestehen.

5. Stecksystem nach einem der vorhergehenden Ansprüche, **dadurch gekennzeichnet,** daß zwischen den freien Enden der kurzen Seitewände (62) des ersten Profilstangenteils (60) eine verbindende schräg zu den Seitenwänden (61,62) verlaufende Wand (65) vorhanden ist.

6. Stecksystem nach einem der vorhergehenden Ansprüche, **dadurch gekennzeichnet,** daß die beiden metallischen Profilstangenteile (61,71) stranggepreßt sind.

7. Stecksystem nach einem der vorhergehenden Ansprüche, **dadurch gekennzeichnet,** daß zwischen zwei Außenprofilstangen (6) des Gehäuses eine in der Wandebene liegende Zwischenprofilstange (80) einfügbar ist, die aus zwei über Isolierstegwände (85) verbundene Zwischenprofilstangenteile (81,82) besteht, von denen das erste Zwischenprofilstangenteil (81) als ein im wesentlichen ebenes Wandteil ausgebildet ist, dessen eine Seite einen Doppelanlageflansch (83) für zwei benachbarte Wandelemente (1) bildet und auf dessen anderer Seite Vorsprünge (26,27) zur Befestigung der Isolierstegwände (85) vorhanden sind, und daß das zweite Zwischenprofilstangenteil (82) ebenfalls im wesentlichen plattenförmig ausgebildet ist, wobei auf der einen Seite der Platte eine Verschiebenut (71) und auf der anderen Seite Vorsprünge (26,27) zur Befestigung der Isolierstegwände vorhanden sind.

8. Stecksystem nach Anspruch 7, **dadurch gekennzeichnet,** daß der äußere Flansch (86) der Verschiebenut in seitlicher, von der Verschiebenut wegweisender Richtung genauso breit ausgebildet ist wie die plattenförmigen Teile der beiden Zwischenprofilstangenteile (81,82).

## Claims

1. Assembling system for constructing a housing frame with wall elements (1) insertible into the open sides of the frame, which system consists of corner pieces (69) and profile bars (6), each corner piece comprising three connector sockets which extend at right angles to one another and on which the profile bars can be mounted, said profile bars comprising a first metallic profile bar portion (60) the cross section of which comprises two adjoining long side walls (61) arranged at right angle to each other, from each end of which extends a short side wall (62) bent off inwardly at right angle and from the free end of each of said short side walls (62) extends a flange wall (63) bent off outwardly at right angle, said profile bars (6) being provided on the inwardly facing side of the housing with a metallic sliding groove (71), **characterized** in that there are two sliding grooves (71) arranged to each other in such a way that their central axes (a) in the cross sectional plane of the profile bar (6) extend perpendicularly to each other and to one of the long side walls (61) each and that the two sliding grooves (65) are formed by a second metallic profile bar portion (70) which is connected to the first metallic profile bar portion (60) by means of insulating web walls consisting of heat-insulating material.

2. Assembling system according to claim 1, **characterized** in that said profile bar portions (60, 70) are connected to each other by means of two insulating web walls (65), which extend between a flange wall (63) and a bottom wall (72) of a sliding groove (71).

3. Assembling system according to any of the preceding claims, **characterized** in that said insulating web walls (65) are shaped at their ends as dove tails or angles and that the opposing sides of the flange wall (63) and the bottom wall (72) of the sliding groove (71) are provided with correspondingly formed projections.

4. Assembling system according to any of the preceding claims, **characterized** in that the insulating web wall (65) consists of glass-fibre reinforced plastic.

5. Assembling system according to any of the preceding claims, **characterized** in that the free ends of the short side walls (62) of the first profile bar portion (60) are connected with each other by a wall (65) extending obliquely to the side walls (61, 62).

6. Assembling system according to any of the preceding claims, **characterized** in that the two metallic profile bar portions (61, 71) are manufactured by extrusion.

7. Assembling system according to any of the preceding claims, **characterized** in that between two outer profile bars (6) of the housing an intermediate profile bar (80) is insertible, which extends in the plane of the wall and consists of two intermediate profile bar portions (81, 82) connected via insulating web walls (85), that a first (81) of the two intermediate profile bar portions is formed as a substantially plane wall portion, one side of which forms a double abutment flange (83) for two adjoining wall elements (1), and the other side of which is provided with projections (26, 27) for fixing the insulating web walls (85), and that the second intermediate profile bar portion (82) is also formed as a substantially plate-like body with a sliding groove (71) on one side of the plate and projections (26, 27) for fixing the insulating web walls on the other side of the plate.

8. Assembling system according to claim 7, **characterized** in that the outer flange (86) of the sliding groove extends laterally in the direction away from the sliding groove with the same width as the plate-shaped portions of the two intermediate profile bar portion (81, 82).

## Revendications

1. Système d'enfichage pour construire un cadre d'un boîtier (enceinte), dans des ouvertures latérales duquel peuvent être insérés des éléments de paroi (1), lequel système d'enfichage est constitué par des pièces d'angle (69) et des barres profilées (6), et dans lequel à partir de chaque pièce d'angle s'étendent trois tubulures perpendiculaires entre elles, sur lesquelles peuvent être emmanchées des barres profilées, et les barres profilées possèdent une première partie métallique (60), qui possède deux longues parois latérales (61), qui se rejoignent à angle droit en coupe transversale et aux extrémités desquelles se raccorde respectivement une courte paroi latérale (62) repliée à angle droit vers l'intérieur et aux extrémités latérales de laquelle se raccorde respectivement une paroi formant bride (63) repliée à angle droit vers l'extérieur, les barres profilées (6) étant pourvues d'au moins une rainure métallique de déplacement (71) présente dans la face intérieure du boîtier, caractérisé par le fait qu'il est prévu deux rainures de déplacement (71), qui sont disposées l'une par rapport à l'autre de telle sorte que leurs axes médians (a), qui sont situés dans la section transversale de la barre profilée (6), sont perpendiculaires entre eux et perpendiculaires à respectivement l'une des longues parois latérales (61), et que les deux rainures de déplacement (71) sont formées par une seconde partie métallique (70) de la barre profilée, qui est raccordée à une première partie métallique (60) de la barre profilée par l'intermédiaire de parois formant barres ou barrettes isolantes (65) réalisées en un matériau thermiquement isolant.

2. Système d'enfichage suivant la revendication 1, caractérisé par le fait que la liaison entre les deux parties (60,70) de la barre profilée est réalisée au moyen de deux parois formant barrettes isolantes (65), qui s'étendent respectivement entre une paroi formant bride (63) et la paroi (72) du fond d'une rainure de déplacement (71).

3. Système d'enfichage suivant l'une des revendications précédentes, caractérisé par le fait que les extrémités des parois en forme de barrettes isolantes (65) ont une forme en queue d'aronde ou en forme de cornière et que les faces, situées réciproquement en vis-à-vis, de la paroi formant bride (63) et de la paroi (72) du fond de la rainure de déplacement (71) sont pourvues de parties saillantes de forme correspondante (26,27).

4. Système d'enfichage suivant l'une des revendications précédentes, caractérisé par le fait que les parois en forme de barrettes isolantes (65) sont réalisées en une matière plastique renforcée par des fibres de verre.

5. Système d'enfichage suivant l'une des revendications précédentes, caractérisé par le fait qu'une paroi de liaison (65), qui est oblique par rapport aux parois latérales (61,62), est présente entre les extrémités libres des courtes parois latérales (62) de la première partie (60) de la barre profilée.

6. Système d'enfichage suivant l'une des revendications précédentes, caractérisé par le fait que les deux parties métalliques (61,71) de la barre profilée sont extrudées.

7. Système d'enfichage suivant l'une des revendications précédentes, caractérisé par le fait qu'entre deux barres profilées extérieures (6) du boîtier peut être insérée une barre profilée intermédiaire (80) qui est située dans le plan de la paroi et qui est constituée de deux parties (81,82) qui sont reliées par l'intermédiaire de parois en forme de barrettes isolantes (80) et parmi lesquelles la première partie (81) de la barrette profilée intermédiaire est réalisée sous la forme d'un élément de paroi sensiblement plan, dont une face forme une bride d'appui double (83) pour deux éléments de paroi voisins (1) et sur l'autre face duquel sont prévues des parties saillantes (26,27) utilisées pour la fixation des parois en forme de barrettes isolantes (85), et que la seconde partie (82) de la barre profilée intermédiaire est également réalisée sensiblement en forme de plaque, auquel cas une rainure de déplacement (71) est prévue dans une face de la plaque, et des parties saillantes (26,27) pour la fixation des parois en forme de barrettes isolantes sont prévues sur l'autre face.

8. Système d'enfichage suivant la revendication 7, caractérisé par le fait que la bride extérieure (86) de la rainure de déplacement possède, dans la direction latérale s'écartant de la rainure de déplacement, pour ainsi dire la même largeur que les éléments en forme de plaques des deux parties (81,82) de la barrette profilée intermédiaire.
